# FASCICULE DE BREVET EUROPEEN

(11) **EP 4 633 985 B1**
(45) Date de publication et mention de la délivrance du brevet: **18.11.2026**
(21) Numéro de dépôt: 23817124.3
(22) Date de dépôt: 30.11.2023
(51) Int. Cl.: B60K 6/48, H01M 8/04089, F02M 35/04, B60K 6/20, B60K 6/32, H01M 8/0662, B60K 6/24

(54) **GROUPE MOTOPROPULSEUR HYBRIDE DE VEHICULE AUTOMOBILE COMPORTANT UNE PILE A COMBUSTIBLE**
ANTRIEBSAGGREGAT EINES HYBRIDKRAFTFAHRZEUGS MIT EINER BRENNSTOFFZELLE
HYBRID MOTOR VEHICLE POWERPLANT COMPRISING A FUEL CELL

(30) Priorité: 12.12.2022 FR 2213192
(43) Date de publication de la demande: 22.10.2025
(73) Titulaire: RENAULT s.a.s., 92100 Boulogne-Billancourt (FR)
(72) Inventeur: DEL FABBRO, Laetitia, 78084 Guyancourt Cedex (FR); GERARD, David, 78084 Guyancourt Cedex (FR)
(74) Mandataire: Renault Group
(86) Numéro de dépôt international: PCT/EP2023/083835
(87) Numéro de publication internationale: WO 2024/126082

(56) Documents cités:
- DE-A1- 102009 060 178
- US-A1- 2005 091 981
- US-A1- 2009 253 021
- US-B1- 6 276 473

## Description

### Domaine technique de l'invention

L'invention concerne un groupe motopropulseur de véhicule automobile comportant :
- une pile à combustible alimentée en air par un circuit d'alimentation comportant un premier filtre à air, dit filtre de pile à combustible ;
- un moteur à combustion interne qui est alimenté en air par un circuit d'admission comportant un deuxième filtre à air, dit filtre de moteur.

### Arrière-plan technique

Il existe actuellement un besoin pour stocker de l'énergie dans un véhicule automobile sous une forme permettant de ne pas émettre de dioxyde de carbone lorsque cette énergie est utilisée pour faire avancer le véhicule automobile.

L'hydrogène fait partie de ces formes d'énergie. Cela implique de devoir stocker de l'hydrogène dans le véhicule sous forme de bouteilles sous pression par exemple.

Une solution connue actuellement est l'utilisation d'une pile à combustible embarquée sur un véhicule automobile équipé d'un moteur électrique de traction.

La pile à combustible présente avantageusement un rendement très important à charges partielles, c'est-à-dire à faibles puissances. En outre, la pile à combustible permet de générer une puissance électrique utilisable dans le moteur électrique de traction pour faire avancer le véhicule sans aucune émission polluante réglementée.

Pour permettre au véhicule automobile de présenter des performances optimales avec un bon rendement, il est avantageux d'associer un moteur à combustion interne au moteur électrique de traction. Le véhicule présente ainsi un groupe motopropulseur hybride. Le moteur à combustion interne permet ainsi de pouvoir générer de fortes puissances avec un rendement important dans le cas des fortes charges du moteur à combustion interne.

Avantageusement, le moteur à combustion interne est conçu pour être alimenté avec un carburant émettant très peu de polluants réglementés. Le carburant est par exemple formé par de l'hydrogène.

Cependant, la présente invention est aussi applicable à des moteurs à combustion interne alimentés par un carburant conventionnel, tel que de l'essence, du gaz naturel ou du diesel.

Pour fonctionner, la pile à combustible doit être alimentée en hydrogène, d'une part, et en air, d'autre part. L'électricité est produite au sein de la pile à combustible par réaction chimique entre l'hydrogène et l'oxygène de l'air.

Il est connu que les polluants de l'air comme des particules, le monoxyde de carbone (CO), les oxydes de soufre (SOx) et d'autres molécules présentes dans l'air sont des polluants pour la pile à combustible. Leurs présences conduisent donc à affecter les performances et la durabilité de la pile à combustible.

Il est donc nécessaire de positionner un filtre à air en amont de l'alimentation en air de de la pile à combustible pour empêcher les polluants de l'air de pénétrer dans la pile à combustible et de l'endommager.

Pour la pile, le filtre à air est un filtre dit combiné, c'est-à-dire qu'il comporte au moins un élément de filtration de particules et un élément de d'adsorption de composés gazeux ciblés.

Un tel filtre à air combiné est particulièrement onéreux. Or, un tel filtre à air présente une durée de fonctionnement maximale, correspondant par exemple à un nombre d'heures d'utilisation de la pile à combustible ou à une distance parcourue par le véhicule. Au-delà de cette durée de fonctionnement maximale, il est nécessaire de changer le filtre à air afin qu'il soit toujours performant en termes d'efficacité et de capacité de filtration.

En outre, l'élément de filtration de particules s'encrasse au fur et à mesure qu'il capture de nouvelles particules. Il en résulte une perte de charge du flux d'air circulant à travers le filtre à air. Il faut donc en outre s'assurer que la perte de charge soit toujours compatible avec l'usage de l'ensemble du système. En cas de pertes de performances, l'ensemble du système se dégraderait rapidement et cela conduirait à une panne de la pile à combustible.

Par ailleurs, de manière connue, le moteur à combustion interne fonctionne en brûlant le carburant avec un comburant qui est généralement de l'air. Comme pour la pile à combustible, l'air alimentant le moteur à combustion interne doit être filtré afin d'en ôter la plupart de particules polluantes qui risqueraient de diminuer le rendement, voire d'endommager le moteur à combustion interne.

Pour le moteur à combustion interne, le filtre comporte uniquement un élément de filtration de particules. En effet, le moteur à combustion interne est beaucoup moins sensible aux polluants gazeux de l'air.

De ce fait, le filtre à air du moteur à combustion interne est beaucoup moins onéreux à remplacer que le filtre à air de la pile à combustible.

Un exemple d'un groupe motopropulseur hybride est décrit dans le document US 2005/091981 A1.

### Résumé de l'invention

L'invention propose un groupe motopropulseur de véhicule automobile comportant :
- une pile à combustible alimentée en air par un circuit d'alimentation comportant un premier filtre à air, dit filtre de pile à combustible ;
- un moteur à combustion interne qui est alimenté en air par un circuit d'admission comportant un deuxième filtre à air, dit filtre de moteur ;
caractérisé en ce qu'il comporte :
- une conduite de dérivation qui raccorde le circuit d'admission, en aval du filtre de moteur, avec le circuit d'alimentation en amont du filtre de pile à combustible ; et
- des moyens commandés d'orientation du flux d'air du circuit d'admission alternativement vers le moteur à combustion ou vers le circuit d'alimentation via la conduite de dérivation.

Selon une autre caractéristique de l'invention, le circuit d'alimentation comporte une vanne de fermeture qui est agencée en amont de la jonction avec la conduite de dérivation et qui est commandée entre au moins un état ouvert et un état fermé.

Selon une autre caractéristique de l'invention, le filtre de moteur comporte au moins un élément de filtration de particules.

Selon une autre caractéristique de l'invention, le filtre de pile à combustible comporte au moins un élément de filtration de particules.

Selon une autre caractéristique de l'invention, le filtre de pile à combustible comporte au moins un élément adsorbant réalisé en un matériau adsorbant, tel que du charbon actif.

Selon une autre caractéristique de l'invention, l'élément de filtration de particules et l'élément adsorbant du filtre de pile à combustible sont intégrés dans une cartouche commune.

Selon une autre caractéristique de l'invention, les moyens commandés d'orientation du flux d'air comportent une vanne à trois voies qui est agencée à la jonction entre le circuit d'admission et la conduite de dérivation.

Selon une autre caractéristique de l'invention, le circuit d'admission comporte un compresseur d'air, dit compresseur de moteur, qui est agencé en aval de la jonction avec la conduite de dérivation.

Selon une autre caractéristique de l'invention, le circuit d'alimentation comporte un compresseur d'air, dit compresseur de pile à combustible, qui est agencé en aval du filtre de pile à combustible.

Selon une autre caractéristique de l'invention, le moteur à combustion interne est un moteur à hydrogène.

Selon une autre caractéristique de l'invention, la pile à combustible alimente en électricité un moteur électrique de traction.

Selon une autre caractéristique de l'invention, lorsque le véhicule est entraîné uniquement par le moteur électrique de traction, la vanne de fermeture est commandée dans son état fermé, et les moyens commandés d'orientation sont commandés pour dériver totalement l'air entrant dans le circuit d'admission vers la conduite de dérivation.

Selon une autre caractéristique de l'invention, lorsque le moteur à combustion interne est sollicité, la vanne de fermeture est commandée dans son état ouvert, et les moyens commandés d'orientation sont commandés pour que l'air entrant dans le circuit d'admission soit totalement dirigé vers le moteur à combustion interne.

### Brève description des figures

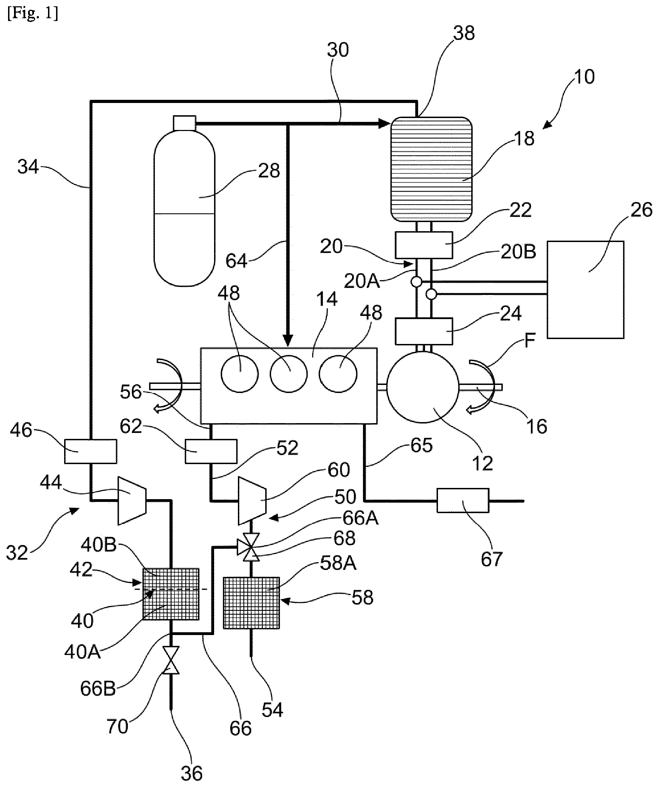

D'autres caractéristiques et avantages de l'invention apparaitront au cours de la lecture de la description détaillée qui va suivre pour la compréhension de laquelle on se reportera à l'unique [Fig.1] annexé qui représente schématiquement un groupe motopropulseur hybride réalisé selon les enseignements de l'invention.

### Description détaillée de l'invention

Dans la suite de la description, des éléments présentant une structure identique ou des fonctions analogues seront désignés par une même référence.

Dans la suite de la description, on adoptera les termes « amont » et « aval » en référence au sens de déplacement des flux d'air dans les conduites.

On a représenté à la [Fig.1] un groupe 10 motopropulseur de véhicule automobile. Il s'agit d'un groupe 10 motopropulseur hybride comportant deux moteurs 12, 14 distincts permettant d'entraîner simultanément ou alternativement des roues motrices du véhicule en rotation pour faire rouler le véhicule.

Ainsi, le premier moteur 12 est un moteur 12 électrique de traction qui est destiné à entraîner les roues motrices du véhicule par l'intermédiaire d'un arbre 16 de transmission, comme indiqué par la flèche « F ».

Le moteur 12 électrique de traction est alimenté en électricité par un système électrique qui comporte une pile 18 à combustible. La pile 18 à combustible est connectée au moteur 12 électrique de traction par l'intermédiaire d'un circuit 20 électrique ici composé de deux câbles 20A, 20B. électriques.

Pour pouvoir convertir le courant électrique produit par la pile 18 à combustible à une tension adaptée au fonctionnement du moteur 12 électrique de traction, un premier transformateur 22 de courant continue en courant continue est interposé dans le circuit 20 électrique. En outre, un deuxième transformateur 24 de courant électrique continu en courant électrique alternatif est interposé dans le circuit 20 électrique entre le premier transformateur 22 et le moteur 12 électrique de traction.

En outre, le système électrique comporte aussi une batterie 26 à haute tension qui est connectée au moteur 12 électrique de traction en parallèle par rapport à la pile 18 à combustible. La batterie 26 est plus particulièrement connectée au circuit 20 électrique entre le premier transformateur 22 et le deuxième transformateur 24. La batterie 26 permet notamment de gérer le démarrage et les phases transitoires de fonctionnement du moteur 12 électrique de traction pour lesquels la pile 18 à combustible ne peut pas fournir une puissance électrique suffisante à elle seule.

La pile 18 à combustible est alimentée en hydrogène par un réservoir 28 par l'intermédiaire d'une conduite 30 d'alimentation en hydrogène.

En outre, la pile 18 à combustible est aussi alimentée en air par un circuit 32 d'alimentation comportant une conduite 34 d'alimentation en air. La conduite 34 d'alimentation comporte ici une prise 36 d'air située à une extrémité amont. Elle comporte ici au moins une extrémité 38 aval raccordée à une entrée d'air de la pile 18 à combustible. La conduite 34 d'alimentation permet ainsi à un premier flux d'air de circuler depuis la prise 36 d'air jusqu'à la pile 18 à combustible.

Un premier filtre à air, dit filtre 40 de pile à combustible est interposé dans la conduite 34 d'alimentation de la pile 18 à combustible. Le filtre 40 de pile à combustible comporte au moins un élément 40A de filtration de particules.

Quel que soit le type d'élément de filtration de particules utilisé, les particules restent piégées dans l'élément 40A de filtration de particules. De ce fait, l'élément 40A de filtration de particules finit par être saturé de particules.

Le filtre 40 de pile à combustible est ici dénué de moyens pour régénérer l'élément 40A de filtration de particules. De tels moyens sont en effet très onéreux et très complexes à mettre en œuvre. Il est donc plus simple et moins coûteux de pouvoir remplacer le filtre 40 de pile à combustible régulièrement avant qu'il ne soit saturé.

A titre d'exemple non limitatif, l'élément 40A de filtration de particules est ici réalisé en un matériau poreux. Le premier flux d'air entrant par la prise 36 d'air traverse l'élément 40A de filtration de particules en passant à travers des pores (non représentés). L'élément 40A de filtration de particules permet ainsi de capturer les particules de dimension plus grande que les dimensions de ses pores. Les pores de l'élément 40A de filtration de particules finissent par se boucher à mesure de l'utilisation du filtre 40 de pile à combustible. Il en résulte une perte de charge du flux d'air le traversant.

A titre d'exemple non limitatif, le matériau poreux est formé d'une feuille de papier constituée d'un assemblage de fibres synthétiques ou d'un textile non tissé pliée en accordéon pour présenter une grande surface de passage.

Le filtre 40 de pile à combustible comporte au moins un élément 40B adsorbant pour adsorber certains gaz nocifs pour la pile 18 à combustible. L'élément 40B adsorbant est réalisé en un matériau adsorbant. Cet élément 40B adsorbant est agencé en aval de l'élément 40A de filtration de particules pour le protéger des particules polluantes. Il est destiné à neutraliser certains gaz polluants contenus dans l'air qui risqueraient d'endommager la pile 18 à combustible. L'élément 40B adsorbant comporte par exemple du charbon actif.

A mesure de son utilisation, le matériau adsorbant de l'élément 40A de filtration de gaz se sature et, après un certain temps, ne peut plus filtrer suffisamment les gaz polluants. Il est donc nécessaire de le changer.

Le filtre 40 à air de pile à combustible forme donc un filtre combiné dans lequel l'élément 40A de filtration de particules et l'élément 40B adsorbant sont intégrés dans une cartouche 42 commune.

En outre, le circuit 32 d'alimentation comporte un compresseur d'air, dit compresseur 44 de pile à combustible, qui est interposé dans la conduite 34 d'alimentation en aval du filtre 40 à air de pile à combustible pour augmenter la pression de l'air filtré.

Le circuit 32 d'alimentation comporte aussi un échangeur 46 de chaleur qui est interposé dans la conduite 34 d'alimentation en aval du compresseur 44 de pile à combustible pour refroidir l'air.

De manière connue, le moteur 14 à combustion interne comporte des cylindres dans chacun desquels coulisse un piston délimitant une chambre 48 de combustion. Le moteur 14 à combustion comporte à titre d'exemple non limitatif trois cylindres. Le moteur 14 à combustion interne est destiné à entraîner les roues motrices du véhicule par l'intermédiaire de l'arbre 16 de transmission, comme indiqué par la flèche « F ».

Chaque chambre 48 de combustion est alimentée par un mélange de carburant et d'air destiné à libérer l'énergie nécessaire à la production d'un couple d'entraînement de l'arbre 16 de transmission par combustion du mélange.

Ainsi, le moteur 14 à combustion interne est alimenté en air par un circuit 50 d'admission comportant une conduite 52 d'admission en air. La conduite 52 d'admission comporte ici une prise 54 d'air située à une extrémité amont. Elle comporte ici au moins une extrémité 56 aval raccordée à une entrée d'air du moteur 14 à combustion interne qui distribue ensuite le flux d'air entre les différentes chambres 48 de combustion. La conduite 52 d'admission permet ainsi à un deuxième flux d'air de circuler depuis la prise 54 d'air jusqu'au moteur 14 à combustion interne.

Un deuxième filtre à air, dit filtre 58 de moteur, est interposé dans la conduite 52 d'admission. Le filtre 58 de moteur comporte au moins un élément 58A de filtration de particules. Les particules restent piégées dans l'élément 58A de filtration de particules. Quel que soit le type d'élément de filtration de particules utilisé, les particules restent piégées dans l'élément 58A de filtration de particules. De ce fait, l'élément 58A de filtration de particules finit par être saturé de particules.

Le filtre 58 de moteur est ici dénué de moyens pour régénérer l'élément 58A de filtration de particules. De tels moyens sont en effet très onéreux et très complexes à mettre en œuvre. Il est donc plus simple et moins coûteux de pouvoir remplacer le filtre 58 de moteur régulièrement avant qu'il ne soit saturé.

A titre d'exemple non limitatif, l'élément 58A de filtration de particules est ici réalisé en un matériau poreux. Le deuxième flux d'air entrant par la prise 54 d'air traverse l'élément 58A de filtration de particules en passant à travers des pores (non représentés). L'élément 58A de filtration de particules permet ainsi de capturer les particules de dimension plus grande que les dimensions de ses pores. De ce fait, les pores de l'élément 58A de filtration de particules finissent par se boucher à mesure de l'utilisation du filtre 58 de moteur, encrassant ainsi l'élément 58A de filtration de particules. Il en résulte une perte de charge du flux d'air le traversant.

A titre d'exemple non limitatif, le matériau poreux est formé d'une feuille de papier constituée d'un assemblage de fibres synthétiques ou d'un textile non tissé pliée en accordéon pour présenter une grande surface de passage.

Le filtre 58 de moteur est ici uniquement un filtre à particules comportant un ou plusieurs éléments 58A de filtration de particules. Le filtre 58 de moteur ne comporte notamment pas d'élément adsorbant. Le ou les éléments 58A de filtration de particules sont généralement agencés dans une même cartouche pour permettre leur changement en une seule opération.

En outre, le circuit 50 d'admission comporte un compresseur d'air, dit compresseur 60 de moteur, qui est interposé dans la conduite 52 d'admission en aval du filtre 58 de moteur pour augmenter la pression de l'air filtré.

Le circuit 50 d'admission comporte aussi un échangeur 62 de chaleur qui est interposé dans la conduite 52 d'admission en aval du compresseur 60 de moteur pour refroidir l'air.

L'invention est applicable à tout type de moteur à combustion interne nécessitant d'être alimenté en air pour permettre la combustion du carburant. Ainsi, le moteur 14 à combustion interne peut être conçu pour fonctionner avec un carburant conventionnel tel que de l'essence, du diesel ou du gaz naturel.

A titre d'exemple non limitatif, le moteur 14 à combustion interne est avantageusement un moteur à hydrogène conçu pour fonctionner avec un carburant formé par de l'hydrogène. En effet, la combustion de l'hydrogène émet très peu de gaz polluants. En outre, du fait de la présence de la pile 18 à combustible, le véhicule automobile embarque déjà un réservoir 28 d'hydrogène. Le même réservoir d'hydrogène peut être utilisé pour alimenter le moteur 14 à combustion interne par l'intermédiaire d'une conduite 64 d'alimentation en carburant. Le moteur 14 à combustion interne et la pile 18 à combustible sont ainsi alimentés par une source commune d'hydrogène formée ici par le réservoir 28.

Par ailleurs, l'évacuation des produits de la combustion du mélange de carburant et d'air des chambres 48 de combustion vers l'atmosphère est réalisée par une conduite 65 d'échappement dans laquelle est interposé un silencieux 67.

Comme expliqué précédemment, le filtre 40 de pile à combustible est un filtre combiné qui peut être onéreux à remplacer lorsque l'un parmi l'éléments 40A de filtration de particules et l'élément 40B adsorbant est saturé. Généralement, l'élément 40A de filtration de particules est saturé avant que l'élément 40B adsorbant ne soit saturé. Comme l'élément 40A de filtration de particules et l'élément 40B adsorbant sont agencés dans une cartouche commune, cela implique de les changer simultanément, même lorsque l'élément 40B adsorbant pourraient encore assurer sa fonction pendant encore longtemps.

L'invention vise donc à prolonger la durée de vie du filtre 40 de pile à combustible tout en conservant une simplicité de remplacement et un encombrement minimum.

A cet effet, le groupe 10 motopropulseur comporte une conduite 66 de dérivation qui raccorde le circuit d'admission, en aval du filtre 58 de moteur, avec le circuit 32 d'alimentation en amont du filtre 40 de pile à combustible.

Plus particulièrement, une extrémité amont de la conduite 66 de dérivation est ici raccordée à la conduite 52 d'admission en un point de jonction 66A situé en aval du filtre 58 de moteur. Une extrémité 66B aval de la conduite 66 de dérivation est raccordée à la conduite 34 d'alimentation en amont du filtre 40 de pile à combustible.

Le compresseur 60 de moteur ici est agencé dans la conduite 52 d'admission en aval de la jonction 66A avec la conduite 66 de dérivation.

Le circuit 32 d'alimentation est ici raccordé au circuit d'admission 50 uniquement par l'intermédiaire de la conduite 66 de dérivation.

En outre, le groupe 10 motopropulseur comporte aussi des moyens commandés d'orientation du flux d'air du deuxième circuit d'alimentation alternativement vers le moteur 14 à combustion interne ou vers le circuit 32 d'alimentation via la conduite 66 de dérivation.

Les moyens commandés d'orientation du flux d'air comportent avantageusement une vanne 68 à trois voies qui est agencée à la jonction 66A entre la conduite 52 d'admission et la conduite 66 de dérivation. La vanne 68 à trois voies comporte ainsi une entrée qui est raccordée à la sortie du filtre 58 de moteur, et deux sorties dont l'une est raccordée au moteur 14 à combustion interne et l'autre est raccordée à la conduite 66 de dérivation. La vanne 68 à trois voies est commandée entre un premier état d'orientation de la totalité du flux d'air entrant vers le moteur 14 à combustion interne et un deuxième état d'orientation de la totalité du flux d'air entrant vers la conduite 66 de dérivation.

En variante non représentée de l'invention, les moyens commandés d'orientation du flux d'air comporte une première vanne à deux voies interposée dans la conduite 52 d'admission en aval de la jonction 66A avec la conduite 66 de dérivation, et une deuxième vanne à deux voies interposée dans la conduite 66 de dérivation. En fermant l'une des deux vannes à deux voies et en ouvrant l'autre des deux vannes à deux voies, on obtient le même effet d'orientation du flux d'air qu'en utilisant la vanne 68 à trois voies.

En outre, le circuit 32 d'alimentation comporte une vanne à deux voies, dite vanne 70 de fermeture, qui est interposée dans la conduite 34 d'alimentation en amont de la jonction 66B avec la conduite 66 de dérivation. La vanne 70 de fermeture est commandée entre au moins un état ouvert pour permettre à un flux d'air entrant de circuler dans le circuit 32 d'alimentation jusqu'à la pile à combustible en passant par le filtre 40 de pile à combustible, et un état fermé pour couper le flux d'air entrant et interdire son passage dans le filtre 40 de pile à combustible.

Lorsque le véhicule est entraîné uniquement par le moteur 12 électrique de traction, le moteur 14 à combustion interne n'est pas alimenté en air. En revanche, la pile 18 à combustible doit être alimentée en air. Dans cette configuration, pour permettre de prolonger la durée de vis de l'élément 40A de filtration de particules du filtre 40 de pile à combustible, il est avantageux d'utiliser le filtre 58 de moteur pour préfiltrer le flux d'air alimentant la pile 18 à combustible.

A cet effet, la vanne 70 de fermeture est commandée dans son état fermé afin d'interdire à l'air non filtré entrant par la prise 36 d'air de passer dans le filtre 40 de pile à combustible. En même temps, les moyens commandés d'orientation, formés ici par la vanne 68 à trois voies, sont commandés dans le deuxième état d'orientation de la totalité du flux d'air entrant par la prise 54 d'air d'admission vers la conduite 66 de dérivation.

Ainsi, le flux d'air alimentant la pile 18 à combustible entre par la prise 54 d'air de la conduite 52 d'admission, puis il passe successivement par le filtre 58 de moteur, dans lequel la plupart des particules restent piégées, puis par la conduite 66 de dérivation, en traversant ensuite le filtre 40 de pile à combustible. Après avoir été filtré par le filtre 40 de pile à combustible, le flux d'air est acheminé jusqu'à la pile à combustible par la conduite 32 d'alimentation.

L'air ayant été préalablement filtré par le filtre 58 de moteur, très peu de particules sont piégées par l'élément 40A de filtration de particules du filtre 40 de pile à combustible. De ce fait, la durée de cet élément 40A de filtration de particules du filtre 40 de pile à combustible est prolongée.

Par ailleurs, lorsque le moteur 14 à combustion interne est sollicité, il doit de nouveau être alimenté en air. De ce fait, la vanne 70 de fermeture est commandée dans son état ouvert, et les moyens commandés d'orientation, formés ici par la vanne 68 à trois voies, sont commandés pour que l'air entrant par la prise 54 d'air du circuit 50 d'admission soit entièrement dirigé vers le moteur 14 à combustion interne en passant uniquement à travers le filtre 58 de moteur. Si la pile à combustible 18 est sollicitée dans le même temps, l'air nécessaire à son fonctionnement entre par la prise 36 d'air de la conduite 32 d'alimentation, puis il est filtré uniquement par le filtre 40 de pile à combustible avant d'être acheminé jusqu'à la pile 18 à combustible par la conduite 34 d'alimentation.

L'invention permet ainsi avantageusement d'allonger la durée de vie du filtre 40 de pile à combustible.

En outre, en faisant passer l'air alimentant la pile 18 à combustible à travers deux filtres 40, 58 en série, la qualité de cet air est encore améliorée, ce qui permet de prolonger encore plus la durée de vis de la pile 18 à combustible.

## Revendications

1. Groupe (10) motopropulseur de véhicule automobile comportant :
- une pile (18) à combustible alimentée en air par un circuit (32) d'alimentation comportant un premier filtre à air, dit filtre (40) de pile à combustible ;
- un moteur (14) à combustion interne qui est alimenté en air par un circuit (50) d'admission comportant un deuxième filtre à air, dit filtre (58) de moteur ;
**caractérisé en ce qu'**il comporte :
- une conduite (66) de dérivation qui raccorde le circuit (50) d'admission, en aval du filtre (58) de moteur, avec le circuit (32) d'alimentation en amont du filtre (40) de pile à combustible ; et
- des moyens commandés d'orientation du flux d'air du circuit (50) d'admission alternativement vers le moteur (14) à combustion ou vers le circuit (32) d'alimentation via la conduite de dérivation.

2. Groupe (10) motopropulseur selon la revendication 1, **caractérisé en ce que** le circuit (32) d'alimentation comporte une vanne (70) de fermeture qui est agencée en amont de la jonction (66B) avec la conduite (66) de dérivation et qui est commandée entre au moins un état ouvert et un état fermé.

3. Groupe (10) motopropulseur selon l'une quelconque des revendications précédentes, **caractérisé en ce que** le filtre (58) de moteur comporte au moins un élément (58A) de filtration de particules.

4. Groupe (10) motopropulseur selon l'une quelconque des revendications précédentes, **caractérisé en ce que** le filtre (40) de pile à combustible comporte au moins un élément (40A) de filtration de particules.

5. Groupe (10) motopropulseur selon l'une quelconque des revendications précédentes, **caractérisé en ce que** le filtre (40) de pile à combustible comporte au moins un élément (40B) adsorbant réalisé en un matériau adsorbant, tel que du charbon actif.

6. Groupe motopropulseur selon la revendication 4 prise en combinaison avec la revendication 5, **caractérisé en ce que** l'élément (40A) de filtration de particules et l'élément (40B) adsorbant du filtre (40) de pile à combustible sont intégrés dans une cartouche commune.

7. Groupe (10) motopropulseur selon l'une quelconque des revendications précédentes, **caractérisé en ce que** les moyens commandés d'orientation du flux d'air comportent une vanne (68) à trois voies qui est agencée à la jonction (66A) entre le circuit (50) d'admission et la conduite (66) de dérivation.

8. Groupe (10) motopropulseur selon l'une quelconque des revendications précédentes, **caractérisé en ce que** le circuit (50) d'admission comporte un compresseur d'air, dit compresseur (60) de moteur, qui est agencé en aval de la jonction (66A) avec la conduite (66) de dérivation.

9. Groupe (10) motopropulseur selon l'une quelconque des revendications précédentes, **caractérisé en ce que** le circuit (32) d'alimentation comporte un compresseur d'air, dit compresseur (44) de pile à combustible, qui est agencé en aval du filtre (40) de pile à combustible.

10. Groupe (10) motopropulseur selon l'une quelconque des revendications précédentes, **caractérisé en ce que** le moteur (14) à combustion interne est un moteur à hydrogène.

11. Groupe (10) motopropulseur selon l'une quelconque des revendications précédentes, **caractérisé en ce que** la pile (18) à combustible alimente en électricité un moteur (12) électrique de traction.

12. Procédé de mise en œuvre d'un groupe motopropulseur selon la revendication 11, **caractérisé en ce que**, lorsque le véhicule est entraîné uniquement par le moteur (12) électrique de traction, la vanne (70) de fermeture est commandée dans son état fermé, et les moyens commandés d'orientation sont commandés pour dériver totalement l'air entrant dans le circuit (50) d'admission vers la conduite (66) de dérivation.

13. Procédé selon la revendication 12, **caractérisé en ce que** lorsque le moteur (14) à combustion interne est sollicité, la vanne (70) de fermeture est commandée dans son état ouvert, et les moyens commandés d'orientation sont commandés pour que l'air entrant dans le circuit (50) d'admission soit totalement dirigé vers le moteur (14) à combustion interne.

## Patentansprüche

1. Antriebsstrang (10) eines Kraftfahrzeugs, umfassend:
- eine Brennstoffzelle (18), die über einen Versorgungskreis (32), der einen ersten Luftfilter, als Brennstoffzellenfilter (40) bezeichnet, umfasst, mit Luft versorgt wird;
- einen Verbrennungsmotor (14), der über einen Ansaugkreis (50), der einen zweiten Luftfilter, als Motorfilter (58) bezeichnet, umfasst, mit Luft versorgt wird;
**dadurch gekennzeichnet, dass** er umfasst:
- eine Umgehungsleitung (66), die den Ansaugkreis (50) stromabwärts des Motorfilters (58) mit dem Versorgungskreis (32) stromaufwärts des Brennstoffzellenfilters (40) verbindet; und
- gesteuerte Mittel zum Leiten des Luftstroms aus dem Ansaugkreis (50) wahlweise zu dem Verbrennungsmotor (14) oder über die Umgehungsleitung zu dem Versorgungskreis (32).

2. Antriebsstrang (10) nach Anspruch 1, **dadurch gekennzeichnet, dass** der Versorgungskreis (32) ein Absperrventil (70) umfasst, das stromaufwärts der Verbindungsstelle (66B) mit der Umgehungsleitung (66) angeordnet ist und zwischen zumindest einem geöffneten Zustand und einem geschlossenen Zustand gesteuert wird.

3. Antriebsstrang (10) nach einem der vorhergehenden Ansprüche, **dadurch gekennzeichnet, dass** der Motorfilter (58) mindestens ein Partikelfilterelement (58A) umfasst.

4. Antriebsstrang (10) nach einem der vorhergehenden Ansprüche, **dadurch gekennzeichnet, dass** der Brennstoffzellenfilter (40) mindestens ein Partikelfilterelement (40A) umfasst.

5. Antriebsstrang (10) nach einem der vorhergehenden Ansprüche, **dadurch gekennzeichnet, dass** der Brennstoffzellenfilter (40) mindestens ein Adsorptionselement (40B) umfasst, das aus einem Adsorptionsmaterial, wie beispielsweise Aktivkohle, hergestellt ist.

6. Antriebsstrang nach Anspruch 4 in Kombination mit Anspruch 5, **dadurch gekennzeichnet, dass** das Partikelfilterelement (40A) und das Adsorptionselement (40B) des Brennstoffzellenfilters (40) in eine gemeinsame Kartusche integriert sind.

7. Antriebsstrang (10) nach einem der vorhergehenden Ansprüche, **dadurch gekennzeichnet, dass** die gesteuerten Mittel zum Leiten des Luftstroms ein Dreiwegeventil (68) umfassen, das an der Verbindungsstelle (66A) zwischen dem Ansaugkreis (50) und der Umgehungsleitung (66) angeordnet ist.

8. Antriebsstrang (10) nach einem der vorhergehenden Ansprüche, **dadurch gekennzeichnet, dass** der Ansaugkreis (50) einen Luftverdichter, als Motorverdichter (60) bezeichnet, umfasst, der stromabwärts der Verbindungsstelle (66A) mit der Umgehungsleitung (66) angeordnet ist.

9. Antriebsstrang (10) nach einem der vorhergehenden Ansprüche, **dadurch gekennzeichnet, dass** der Versorgungskreis (32) einen Luftverdichter, als Brennstoffzellenverdichter (44) bezeichnet, umfasst, der stromabwärts des Brennstoffzellenfilters (40) angeordnet ist.

10. Antriebsstrang (10) nach einem der vorhergehenden Ansprüche, **dadurch gekennzeichnet, dass** der Verbrennungsmotor (14) ein Wasserstoffmotor ist.

11. Antriebsstrang (10) nach einem der vorhergehenden Ansprüche, **dadurch gekennzeichnet, dass** die Brennstoffzelle (18) einen elektrischen Traktionsmotor (12) mit elektrischer Energie versorgt.

12. Verfahren zum Betreiben eines Antriebsstrangs nach Anspruch 11, **dadurch gekennzeichnet, dass**, wenn das Fahrzeug ausschließlich durch den elektrischen Traktionsmotor (12) angetrieben wird, das Absperrventil (70) in seinen geschlossenen Zustand gesteuert wird und die gesteuerten Leitmittel so gesteuert werden, dass die gesamte in den Ansaugkreis (50) eintretende Luft zu der Umgehungsleitung (66) abgeleitet wird.

13. Verfahren nach Anspruch 12, **dadurch gekennzeichnet, dass**, wenn der Verbrennungsmotor (14) in Anspruch genommen wird, das Absperrventil (70) in seinen geöffneten Zustand gesteuert wird und die gesteuerten Leitmittel so gesteuert werden, dass die gesamte in den Ansaugkreis (50) eintretende Luft zu dem Verbrennungsmotor (14) geleitet wird.

## Claims

1. Powertrain (10) for a motor vehicle, comprising:
- a fuel cell (18) supplied with air by a supply circuit (32) comprising a first air filter, referred to as the fuel-cell filter (40);
- an internal combustion engine (14) supplied with air by an intake circuit (50) comprising a second air filter, referred to as the engine filter (58);
**characterised in that** it comprises:
- a bypass duct (66) which connects the intake circuit (50), downstream of the engine filter (58), to the supply circuit (32), upstream of the fuel-cell filter (40); and
- controlled means for directing the air flow from the intake circuit (50) alternately towards the combustion engine (14) or towards the supply circuit (32) via the bypass duct.

2. Powertrain (10) according to claim 1, **characterised in that** the supply circuit (32) comprises a shut-off valve (70) which is arranged upstream of the junction (66B) with the bypass duct (66) and which is controlled between at least an open state and a closed state.

3. Powertrain (10) according to any one of the preceding claims, **characterised in that** the engine filter (58) comprises at least one particle-filtering element (58A).

4. Powertrain (10) according to any one of the preceding claims, **characterised in that** the fuel-cell filter (40) comprises at least one particle-filtering element (40A).

5. Powertrain (10) according to any one of the preceding claims, **characterised in that** the fuel-cell filter (40) comprises at least one adsorbent element (40B) made of an adsorbent material, such as activated carbon.

6. Powertrain according to claim 4 in combination with claim 5, **characterised in that** the particle-filtering element (40A) and the adsorbent element (40B) of the fuel-cell filter (40) are integrated into a common cartridge.

7. Powertrain (10) according to any one of the preceding claims, **characterised in that** the controlled means for directing the air flow comprise a three-way valve (68) which is arranged at the junction (66A) between the intake circuit (50) and the bypass duct (66).

8. Powertrain (10) according to any one of the preceding claims, **characterised in that** the intake circuit (50) comprises an air compressor, referred to as the engine compressor (60), which is arranged downstream of the junction (66A) with the bypass duct (66).

9. Powertrain (10) according to any one of the preceding claims, **characterised in that** the supply circuit (32) comprises an air compressor, referred to as the fuel-cell compressor (44), which is arranged downstream of the fuel-cell filter (40).

10. Powertrain (10) according to any one of the preceding claims, **characterised in that** the internal combustion engine (14) is a hydrogen engine.

11. Powertrain (10) according to any one of the preceding claims, **characterised in that** the fuel cell (18) supplies electrical power to an electric traction motor (12).

12. Method for operating a powertrain according to claim 11, **characterised in that**, when the vehicle is driven solely by the electric traction motor (12), the shut-off valve (70) is controlled into its closed state, and the controlled directing means are controlled so as to divert all of the air entering the intake circuit (50) towards the bypass duct (66).

13. Method according to claim 12, **characterised in that**, when the internal combustion engine (14) is called upon, the shut-off valve (70) is controlled into its open state, and the controlled directing means are controlled such that all of the air entering the intake circuit (50) is directed towards the internal combustion engine (14).
